# EUROPEAN PATENT SPECIFICATION

(11) **EP 2 477 443 B1**
(45) Date of publication and mention of the grant of the patent: **01.01.2020**
(21) Application number: 10814873.5
(22) Date of filing: 09.09.2010
(51) Int. Cl.: H04W 48/08, H04L 1/18, H04L 5/00

(54) **METHOD, SYSTEM AND DEVICE FOR TRANSMITTING SYSTEM INFORMATION**
VERFAHREN, SYSTEM UND VORRICHTUNG ZUR ÜBERTRAGUNG VON SYSTEMINFORMATIONEN
PROCÉDÉ, SYSTÈME ET DISPOSITIF DE TRANSMISSION D'INFORMATIONS SYSTÈME

(30) Priority: 11.09.2009 CN 200910092379
(43) Date of publication of application: 18.07.2012
(73) Proprietor: China Mobile Communications Corporation, Beijing 100032 (CN)
(72) Inventor: HU, Nan, Beijing 100032 (CN)
(74) Representative: Körfer, Thomas
(86) International application number: PCT/CN2010/001381
(87) International publication number: WO 2011/029271

(56) References cited:
- EP-A1- 1 909 523
- WO-A1-2008/093985
- CN-A- 1 505 416
- CN-A- 101 500 217
- CN-A- 101 518 131
- NTT DOCOMO: "Update to default configurations of system information blocks in TS 36.508", 3GPP DRAFT; R5-085514_SYSTEMCONFIGURATIONS, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Prague; 20081114, 14 November 2008 (2008-11-14), XP050328474, [retrieved on 2008-11-14]

## Description

### Field of the Invention

The present invention relates to the field of communications and particularly to a method, system and device for transmitting system information.

### Background of the Invention

Numerous novel technologies have been introduced in the LTE-Advanced (LTE-A), and the technology of carrier aggregation has also been introduced therein as a key technology to support transmission with a higher bandwidth. A general principle of carrier aggregation lies in that two or more underlying carriers are aggregated together for operation to thereby satisfy a higher bandwidth demand. With the introduced technology of carrier aggregation, the number of carriers in a cell has been changed from one to more, thus giving rise to a multi-carrier communication scenario. At present, a method for transmitting and receiving system information in an LTE system has continued their usage in a method for transmitting and receiving system information in an LTE-A system.

In the LTE system, there are twelve classes of LTE system information including a master system information block and a system information block 1 to a system information block 11 respectively, where the master system information block bears the bandwidth of a downlink carrier, a frame number and configuration information of a Physical Hybrid Automatic Repeat reQuest (ARQ) Indicator Channel (PHICH); the system information block 1 bears both whether the downlink carrier allows an access of a user equipment and scheduling information of the other system information blocks, where the scheduling information of the other system information blocks identifies information on the locations and periodicities at which the system information block 2 to the system information block 11 are transmitted; the system information block 2 bears a radio resource configuration condition of the downlink carrier, e.g., bandwidth information of an uplink carrier paired with the downlink carrier over which the information is borne, configuration information of a Multimedia Broadcast multicast service Single Frequency Network (MBSFN) of the downlink carrier, etc.; the system information block 3 to the system information block 8 generally bear information related to cell selection or reselection by the user equipment; if the downlink carrier belongs to a home base station, then the system information block 9 bears the identifier (ID) of the home base station, so the system information block 9 exists only when the downlink carrier belongs to a home base station; and the system information block 10 and the system information block 11 bear information related to an Earthquake and Tsunami Warning System (ETWS) of the system.

In an LTE-A multi-carrier scenario, system information of a cell is configured for transmission as in the following steps:
Step 101. One downlink carrier in a cell is selected arbitrarily at the network side.
Step 102. The downlink carrier is configured with system information at the network side.
   (1) The master system information block is generated at the network side from the bandwidth of the downlink carrier, a frame number of the cell and PHICH configuration of the downlink carrier.
   (2) The system information block 1 is generated at the network side according to whether the downlink carrier allows an access of a user equipment and to the system information blocks 3 to 11 of the downlink carrier.
   (3) The system information block 2 is generated at the network side according to a radio resource configuration condition of the downlink carrier.
   (4) The system information block 3 to the system information block 11 are configured at the network side according to the cell and a condition of the entire network.
Step 103. The configured system information is transmitted from the network side over the downlink carrier.
   (1) The master system information block is placed at the network side over a Physical Broadcast Channel (PBCH) of the downlink carrier for transmission.
   (2) The system information block 1 to the system information block 11 are placed at the network side over a Physical Downlink Shared Channel (PDSCH) of the downlink carrier for transmission, and since the PDSCH is indicated over a Physical Downlink Control Channel (PDCCH), a System Information-Radio Network Temporary Identifier (SI-RNTI) of the cell is carried over the PDCCH indicating the PDSCH over which the system information is carried.
Step 104. It is determined at the network side whether there is a downlink carrier for which no system information is configured.

It is determined at the network side whether there is a downlink carrier for which no system information is configured particularly in either of the following two situations:
The flow goes to the step 102 when it is determined at the network side that there is a downlink carrier for which no system information is configured; or
Configuration and transmission of the system information terminates when it is determined at the network side that there is no downlink carrier for which no system information is configured.

In an LTE-A multi-carrier scenario, a user equipment receives system information of a cell as in the following steps:
Step 201. A user equipment detects a specific downlink carrier of a cell by capturing a downlink synchronization signal.
Step 202. The user equipment receives a master system information block of the downlink carrier over a PBCH of the downlink carrier and acquires a bandwidth and PHICH configuration information of the downlink carrier and a frame number of the cell.
Step 203. The user equipment performs blind detection of a PDCCH of the downlink carrier according to the PHICH configuration information of the downlink carrier and parses a PDSCH corresponding to a specific PDCCH, i.e., system information, upon detected inclusion of an SI-RNTI over the PDCCH, particularly in the following steps:
   (a) Since the system information block 1 is transmitted at a fixed location, the user equipment firstly parses the system information block 1 and acquires information on whether an access of the user equipment to the downlink carrier is allowed and scheduling information of the other system information blocks of the downlink carrier. If no access of the user equipment is allowed, then the user equipment goes to the step 201; otherwise, the flow goes to the step 203(b).
   (b) The user equipment acquires the other system information blocks at corresponding locations according to the scheduling information of the other system information blocks in the system information block 1 and acquires corresponding system information.
Step 204. The user equipment determines whether it is necessary to acquire system information of another downlink carrier.

The user equipment determines it is necessary to acquire system information of another downlink carrier particularly in either of the following two situations:
The flow goes to the step 201 to repeat the processes of synchronization, listening and parsing when the user equipment determines that it is necessary to acquire system information of another downlink carrier; or
The present flow ends when the user equipment determines that it is not necessary to acquire system information of any other downlink carrier.

The inventors have identified during making of the invention at least the following problems in the prior art:
With transmission and reception of system information of a cell in the LTE-A multi-carrier scenario in the prior art, system information of each downlink carrier in the cell is broadcasted only over that downlink carrier, and the system information is broadcasted separately between one downlink carrier and another; and when a user equipment listening to a specific downlink carrier is going to acquire system information of another downlink carrier in the cell, the user equipment has to synchronize, listen to and parse the other downlink carrier again.

EP 1909 523 A1 discloses a method for informing a mobile terminal (MN), which is located in a first cell, on system information of a second cell. In particular, pointers to the system information are transmitted from the base station of the first cell to the mobile node, while the mobile node is located in the first cell. The MN processes said pointer, comprising e.g. information on the transmission format and timing of system information in the second cell. Using an acquisition gap assigned by the network, the MN changes the frequency to the second frequency so as to acquire the system information based on the previously received scheduling information. Thus, the acquisition time for important system information may be reduced, as no Master Information Block on the second frequency has to be processed first, in order to acquire the system information.

### Summary of the Invention

Embodiments of the invention provide a method, system and user equipment for transmitting system information in order to improve the speed at which and the efficiency with which a user equipment acquires system information of a downlink carrier.

An embodiment of the invention provides a method for transmitting system information in an LTE-Advanced, LTE-A, system in a multi-carrier communication scenario, a plurality of downlink carriers are configured in one cell in the LTE-A system, each downlink carrier is configured with one master system information block and radio resource configuration information, the method includes:
transmitting, from a network side, system information over a downlink carrier of the plurality of downlink carriers, wherein the system information includes a master system information block of the downlink carrier, radio resource configuration information of the downlink carrier, a master system information block of at least one other downlink carrier among the plurality of downlink carriers, and radio resource configuration information of the at least one other downlink carrier;
receiving, by a user equipment, the system information over the downlink carrier;
wherein the user equipment receiving the system information over the downlink carrier comprises:
   the user equipment detecting the downlink carrier;
   the user equipment receiving the master system information block of the detected downlink carrier over the downlink carrier; and
   the user equipment receiving other system information over the downlink carrier according to the master system information block, wherein the other system information comprises the radio resource configuration information of the downlink carrier, and the master system information block and the radio resource configuration information of the at least one other downlink carrier;
wherein transmitting the system information from the network side over the downlink carrier comprises:
transmitting the master system information block of the downlink carrier from the network side over a Physical Broadcast Channel, PBCH, of the downlink carrier;
transmitting the radio resource configuration information of the downlink carrier from the network side over a Physical Downlink Shared Channel, PDSCH; and
transmitting the master system information block and the radio resource configuration information of the at least one other downlink carrier from the network side over the PDSCH;
and the method further comprises:
   carrying at the network side a System Information-Radio Network Temporary Identifier, SI-RNTI, of the downlink carrier over a Physical Downlink Control Channel, PDCCH, when the radio resource configuration information of the downlink carrier is transmitted over the PDSCH of the downlink carrier; and
   carrying at the network side an SI-RNTI of the at least one other downlink carrier over the PDCCH when the radio resource configuration information of the at least one other downlink carrier is transmitted over the PDSCH of the downlink carrier.

The master system information block and radio resource configuration information of each downlink carrier among the plurality of downlink carriers is configured at the network side, and the system information is transmitted over each downlink carrier among the plurality of downlink carriers.

The master system information block of the at least one other downlink carrier is configured at the network side in a system information block 12 of the downlink carrier over which the system information is transmitted.

The user equipment receiving the other system information includes:
the user equipment receiving the radio resource configuration information of the downlink carrier by the SI-RNTI of the downlink carrier carried over the downlink carrier; and
the user equipment receiving the radio resource configuration information of the at least one other downlink carrier by the SI-RNTI of the at least one other downlink carrier carried over the downlink carrier.

An embodiment of the invention provides a communication system in an LTE-Advanced, LTE-A, system in a multi-carrier communication scenario, a plurality of downlink carriers are configured in one cell in the LTE-A system, each downlink carrier is configured with one master system information block and radio resource configuration information, the communication system including:
a network-side device configured to transmit system information over a downlink carrier of the plurality of downlink carriers, wherein the system information includes a master system information block of the downlink carrier, radio resource configuration information of the downlink carrier, a master system information block of at least one other downlink carrier among the plurality of downlink carriers, and radio resource configuration information of the at least one other downlink carrier;
a user equipment configured to receive system information over the downlink carrier, wherein the user equipment configured to detect the downlink carrier, receive the master system information block of the detected downlink carrier over the downlink carrier; and receive other system information over the downlink carrier according to the master system information block, wherein the other system information comprises the radio resource configuration information of the downlink carrier, and the master system information block and the radio resource configuration information of the at least one other downlink carrier;
wherein the network-side device is configured to:
to transmit the master system information block of the downlink carrier over a Physical Broadcast Channel, PBCH, of the downlink carrier;
to transmit the radio resource configuration information of the downlink carrier over a Physical Downlink Shared Channel, PDSCH; and
to transmit the master system information block and the radio resource configuration information of the at least one other downlink carrier over the PDSCH;
wherein the network-side device is further configured to carry a System Information-Radio Network Temporary Identifier, SI-RNTI, of the downlink carrier over a Physical Downlink Control Channel, PDCCH, when the radio resource configuration information of the downlink carrier is transmitted over the downlink carrier; and to carry an SI-RNTI of the at least one other downlink carriers over the PDCCH when the radio resource configuration information of the at least one other downlink carrier is transmitted.

The network-side device is further configured to configure the master system information block and the radio resource configuration information of each downlink carrier among the plurality of downlink carriers; and transmit the system information over each downlink carrier among the plurality of carriers.

The user equipment is further configured:
to receive the radio resource configuration information of the downlink carrier over the downlink carrier by the SI-RNTI, of the downlink carrier carried over the downlink carrier; and
to receive the radio resource configuration information of the at least one other downlink carrier over the downlink carrier by the SI-RNTI of the at least one other downlink carrier carried over the downlink carrier.

In the embodiments of the invention, system information of at least one downlink carrier among a plurality of carriers is transmitted over the downlink carrier together with system information of at least one other downlink carrier among the plurality of carriers, so that a user equipment can receive the system information of the other downlink carrier or carriers over the corresponding downlink carrier to thereby improve the speed at which and the efficiency with which the user equipment acquires the system information of the other downlink carrier or carriers. Of course, any product according to an embodiment of the invention may not necessarily attain all the foregoing advantages at the same time.

### Brief Description of the Drawings

In order to describe more clearly the technical solution of the invention or in the prior art, the drawings to be used in the description of the invention or the prior art will be briefly introduced below, and apparently the drawings in the following description illustrate only some of embodiments of the invention, and other drawings can also occur to those ordinarily skilled in the art benefiting from these drawings but without any inventive effort.

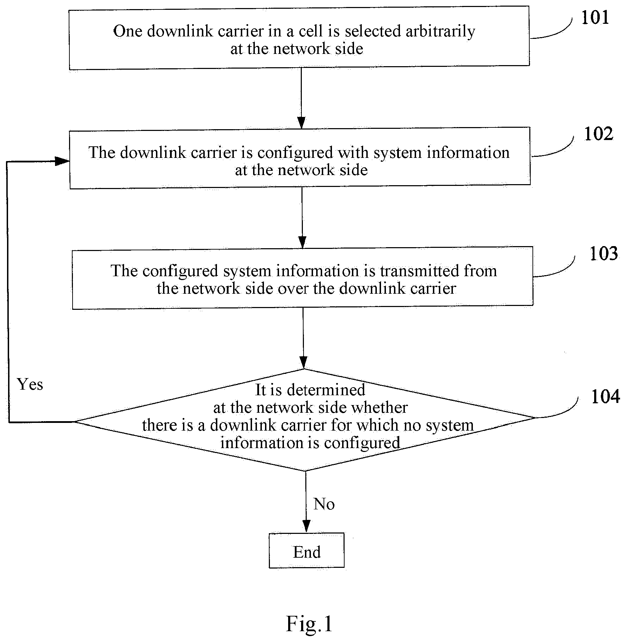

Fig.1 is a flow chart of a method for configuring and transmitting system information of a plurality of carriers in the prior art;
Fig.2 is a flow chart of a method for receiving system information of a plurality of carriers in the prior art;
Fig.3 is a flow chart of a method for transmitting system information according to an embodiment of the invention;
Fig.4 is a flow chart of configuring system information of a plurality of carriers in a method for transmitting system information according to an embodiment of the invention;
Fig.5 is a flow chart of transmitting system information of a plurality of carriers in a method for transmitting system information according to an embodiment of the invention;
Fig.6 is a flow chart of receiving system information of a plurality of carriers in a method for transmitting system information according to an embodiment of the invention;
Fig.7 is a schematic structural diagram of a network-side device according to an embodiment of the invention; and
Fig.8 is a schematic structural diagram of a user equipment according to an embodiment of the invention.

### Detailed Description of the Embodiments

In embodiments of the invention, each downlink carrier among a plurality of carriers is configured with system information of the other downlink carriers, and the system information is transmitted over the corresponding downlink carrier, so that a user equipment can receive the system information of the other downlink carriers over the corresponding downlink carrier to thereby improve the speed at which and the efficiency with which the user equipment acquires the system information of the other downlink carriers.

It shall be noted that each downlink carrier among the plurality of carriers is configured with the system information of the other downlink carriers as a preferable step for the purpose of the invention. Generally in an embodiment of the invention, it may not be necessary to configure each downlink carrier with the system information of the other downlink carriers, but it is still possible to improve the speed at which and the efficiency with which the user equipment acquires the system information of the other downlink carriers as compared with the prior art so long as at least one downlink carrier is configured with system information of the other downlink carriers.

The solution of the invention will be described in the following embodiments by way of an example in which each downlink carrier among a plurality of carriers is configured and system information is transmitted over each configured downlink carrier.

The technical solution of the invention will be described clearly and fully below with reference to the drawings of the invention, and apparently the described embodiments are only a part but not all of embodiments of the invention. Any other embodiments which can occur to those ordinarily skilled in the art benefiting from the embodiments of the invention but without any inventive effort shall come into the claimed scope of the invention.

In order to accommodate transmission of system information of an LTE-A system, the system information of the LTE-A system is defined further to the twelve classes of system information defined for the LTE system. Firstly the defined system information of the LTE-A system will be introduced below.

In order to ensure backward compatibility, all the twelve classes of system information defined for the LTE system continue their use in the system information of the LTE-A system and includes a master system information block and a system information block 1 to a system information block 11 respectively, where the master system information block bears the bandwidth of a downlink carrier, a frame number and PHICH configuration information; the system information block 1 bears both whether the downlink carrier allows an access of a user equipment and scheduling information of the other system information blocks, where the scheduling information of the other system information blocks identifies information on the locations and periodicities at which the system information block 2 to the system information block 11 are transmitted; the system information block 2 bears a radio resource configuration condition of the downlink carrier, e.g., bandwidth information of an uplink carrier paired with the downlink carrier over which the information is borne, MBSFN configuration information of the downlink carrier, etc.; the system information block 3 to the system information block 8 generally bear information related to cell selection or reselection by the user equipment; if the downlink carrier belongs to a home base station, then the system information block 9 bears the ID of the home base station, so the system information block 9 exists only when the downlink carrier belongs to a home base station; and the system information block 10 and the system information block 11 bear ETWS related information at the network side.

In an embodiment of the invention, a thirteenth class of system information is added further to the original twelve classes of system information, i.e., a system information block 12 which bears at least the frequency points, bandwidths and the PHICH configuration information of all the other downlink carriers than the downlink carrier bearing the system information block.

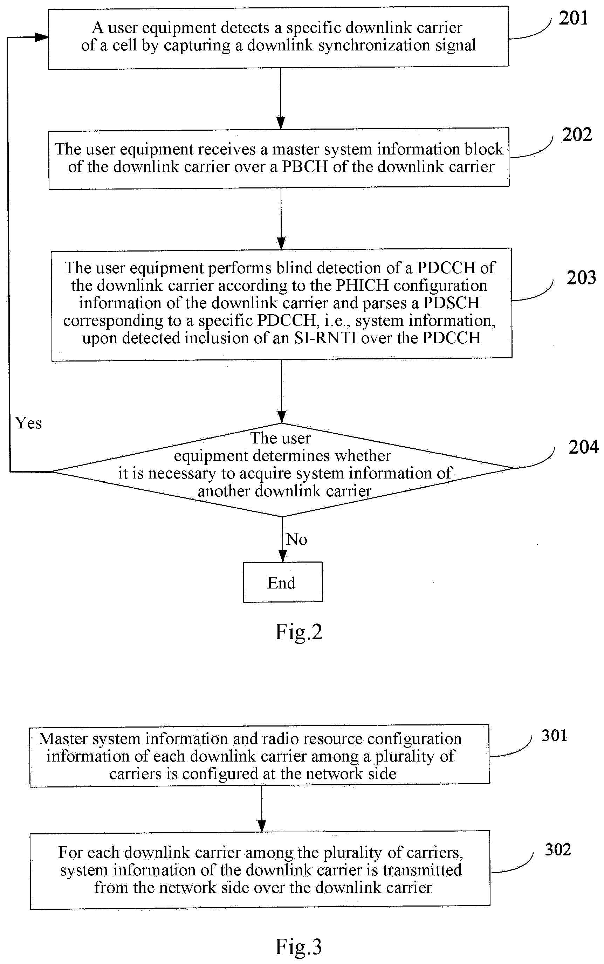

An embodiment of the invention provides a method for transmitting system information, as illustrated in Fig.3, which particularly includes the following steps:
Step 301. Master system information and radio resource configuration information of each downlink carrier among a plurality of carriers is configured at the network side.

System information blocks of one downlink carrier in an LTE-A system are somewhat different from those of another, but master system information and radio resource configuration information of each downlink carrier is requisite, so one or more of information of a system information block 1 and a system information block 3 to a system information block 11 of the downlink carrier can also be configured according to a radio resource status of the downlink carrier in this step in addition to the master system information and the radio resource configuration information thereof.

Step 302. For each downlink carrier among the plurality of carriers, system information of the downlink carrier is transmitted from the network side over the downlink carrier.

The system information includes the master system information and the radio resource configuration information of the downlink carrier and also master system information of all the other downlink carriers and also possibly radio resource configuration information of the other downlink carriers.

If one or more of the information of the system information block 1 and the system information block 3 to the system information block 11 is configured in the step 301, then the system information in this step shall further include the one or more of the information of the system information block 1 and the system information block 3 to the system information block 11.

In the solution of this embodiment, the other downlink carriers can subsequently be identified at the side of the user equipment according to the master system information of the other downlink carriers when the master system information of the other downlink carriers is included over a carrier of the system, and preferably in this embodiment, the radio resource configuration information of the other downlink carriers is also carried in the transmitted system information to thereby improve the speed at which and the efficiency with which the user equipment identifies the other downlink carriers.

The solution of this embodiment will be described in the following embodiments by way of an example in which a downlink carrier is configured with master system information and radio resource configuration information of other downlink carriers.

System information of an LTE-A system is transmitted and received generally in three steps of configuring the system information, transmitting the system information and receiving the system information, and the following description will be given respectively of these steps in which the system information is transmitted in the LTE-A system.

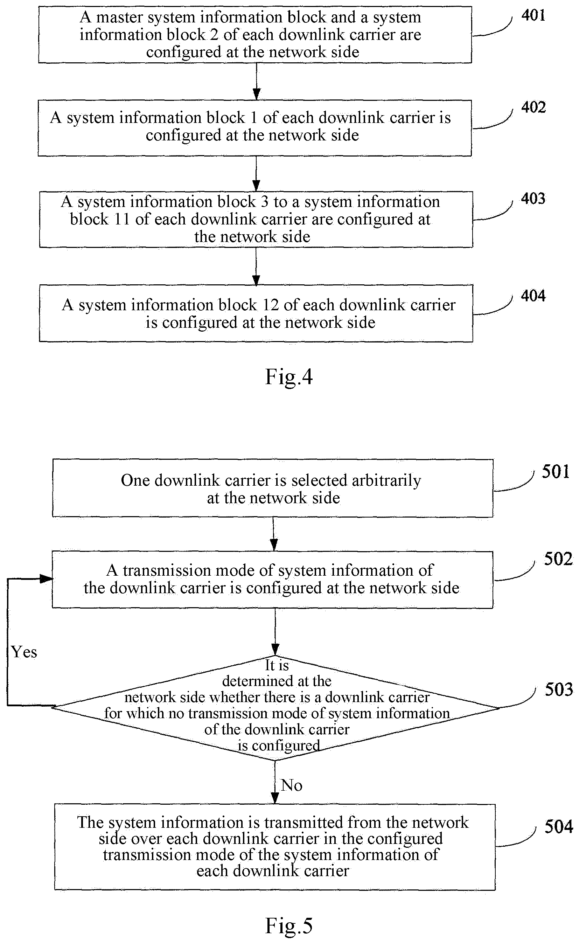

An embodiment of the invention provides a method for configuring system information of a plurality of carriers in a method for transmitting system information, as illustrated in Fig.4, which particularly includes the following steps:
Step 401. A master system information block and a system information block 2 of each downlink carrier are configured at the network side.

Particularly the master system information block bears the bandwidth of the downlink carrier, a frame number and PHICH configuration information; and the system information block 2 bears a radio resource configuration condition of the downlink carrier, e.g., bandwidth information of an uplink carrier paired with the downlink carrier over which the information is borne, MBSFN configuration information of the downlink carrier, etc.

Specifically the master system information block and the system information block 2 of each downlink carrier are configured at the network side as follows:
(1) The master system information block of each downlink carrier is configured at the network side according to the bandwidth of each downlink carrier, a frame number of a cell and PHICH configuration of the downlink carrier.
(2) The system information block 2 of each downlink carrier is configured at the network side according to a radio resource configuration condition of each downlink carrier.

For example, the cell is a multi-carrier cell in which there are five downlink carriers in total, and each downlink carrier is configured at the network side with one master system information block and one system information block 2, so five master system information blocks and five system information blocks 2 in total belonging to the five different downlink carriers are configured at the network side.

Step 402. A system information block 1 of each downlink carrier is configured at the network side.

The system information block 1 is generated at the network side according to scheduling information, of the system block 2 to a system information block 12 of the downlink carrier and the information blocks 2 of the other downlink carriers, over the downlink carrier, and to information on whether the present downlink carrier allows an access of a user equipment, where the scheduling information of the respective system information blocks includes information on the locations and periodicities at which the respective system information blocks are transmitted over the downlink carrier.

For example, the cell is a multi-carrier cell in which there are five downlink carriers in total, and each downlink carrier is configured at the network side with one system information block 1, so five system information blocks 1 in total belonging to the five different downlink carriers are configured at the network side so that each system information block 1 bears the information related to the corresponding downlink carrier.

Step 403. A system information block 3 to a system information block 11 of each downlink carrier are configured at the network side.

Specifically the system information block 3 to the system information block 11 of each downlink carrier are configured at the network side as follows:
The system information block 3 to the system information block 11 of each downlink carrier are configured at the network side according to the cell and a condition of the entire network. The system information block 3 to the system information block 8 generally bear information related to cell selection or reselection by the user equipment; if the downlink carrier belongs to a home base station, then the system information block 9 bears the ID of the home base station; otherwise, the system information block 9 is absent; and the system information blocks 10 and 11 bear ETWS related information at the network side.

It shall be noted that the system information block 3 to the system information block 11 of one downlink carrier configured at the network side may the same as or different from those of another.

For example, the cell is a multi-carrier cell in which there are five downlink carriers in total, and each downlink carrier is configured at the network side with the system information block 3 to the system information block 11, so five sets of system information blocks 3 to system information blocks 11 in total belonging to the five different downlink carriers are configured at the network side.

Step 404. A system information block 12 of each downlink carrier is configured at the network side.

Specifically the system information block 12 of each downlink carrier is configured at the network side according to the master system information blocks configured for the respective downlink carriers in the step 401. The system information block 12 bears at least master system information, including the frequency points and bandwidths and the PHICH configuration information, of all the other downlink carriers in the cell than the downlink carrier bearing the system information block 12.

For example, the cell is a multi-carrier cell in which there are five downlink carriers in total, and the system information 12 of the downlink carrier 1 includes master system information of the other four downlink carriers than the downlink carrier 1. The other downlink carriers are configured similarly to the downlink carrier 1, and a repeated description will be omitted here.

It shall be noted that the step 401, the step 402, the step 403 and the step 404 can be performed in a variable order so long as the step 404 is performed after the step 401.

In the step 401 to the step 404, the system information of each downlink carrier is configured at the network side so that the system information of each downlink carrier in the plurality of carriers includes the master system information blocks of the present downlink carrier and all the other downlink carriers.

An embodiment of the invention provides a method for transmitting system information of a plurality of carriers in a method for transmitting system information, as illustrated in Fig.5, which particularly includes the following steps:
Step 501. One downlink carrier is selected arbitrarily at the network side.
Step 502. A transmission mode of system information of the downlink carrier is configured at the network side.

The transmission mode of the system information of the downlink carrier is configured at the network side as follows: a transmission mode of a master system information block of the downlink carrier, a transmission mode of a system information block 2 of the downlink carrier and system information blocks 2 of other downlink carriers, a transmission mode of a system information block 1, and a transmission mode of a system information block 3 to a system information block 12 of the downlink carrier are configured at the network side particularly in the following steps:
(1) The transmission mode of the master system information block of the downlink carrier is configured at the network side.
   Specifically the master system information block of the downlink carrier is placed at the network side over a PBCH of the downlink carrier for transmission.
(2) The transmission mode of the system information block 2 of the downlink carrier and the system information blocks 2 of the other downlink carriers are configured at the network side.
   The system information block 2 of the downlink carrier and the system information blocks 2 of the other downlink carriers are placed at the network side over a PDSCH of the downlink carrier for transmission.
   At this time there are system information blocks 2 of a plurality of downlink carriers over the PDSCH and information borne over the PDSCH is indicated over a PDCCH, so SI-RNTIs corresponding to the different downlink carriers are carried over the PDCCH indicating the PDSCH to indicate the different system information blocks 2.
   Specifically the system information block 2 is carried as under such a specific rule: an SI-RNTI with the value of FFFF (hexadecimal) is added over the PDCCH indicating the PDSCH over which the system information block 2 of the downlink carrier is borne; and SI-RNTIs with a number M of values selected from FFF3 to FFFC are added over the PDCCH indicating the PDSCH over which the system information blocks 2 of the other downlink carriers are borne, wherein M+1 represents the number of downlink carriers in the cell, and a one-to-one correspondence relationship exists between these SI-RNTIs and other downlink carriers and is known to both the network side and the user equipment. For example, it is agreed in advance between the system and the user equipment that FFF3 to FFF6 indicate the system information of all the other downlink carriers than the listened-to downlink carrier and that these SI-RNTIs correspond one-to-one to the values of frequency points of the downlink carriers in accordance with the order of the size of values, that is, FFF3 corresponds to the downlink carrier at the lowest frequency among all the other downlink carriers than the listened-to downlink carrier, and FFF6 corresponds to the downlink carrier at the highest frequency among all the other downlink carriers than the listened-to downlink carrier.
   It shall be noted that at least the system information block 2 of the downlink carrier is carried over the downlink carrier and the other downlink carriers with their system information blocks 2 being carried are determined at the network side dependent upon load conditions of the respective downlink carriers and other factors.
(3) The transmission mode of the system information block 1 of the downlink carrier is configured at the network side.
   The system information block 1 is placed at the network side over the PDSCH of the downlink carrier for transmission, and the SI-RNTI (FFFF) of the downlink carrier is carried over the PDCCH indicating the PDSCH over which the system information is borne.
(4) The transmission mode of the system information block 3 to the system information block 12 of the downlink carrier is configured at the network side.

The system information block 3 to the system information block 12 are placed at the network side over the PDSCH of the downlink carrier for transmission, and the SI-RNTI (FFFF) of the downlink carrier is carried over the PDCCH indicating the PDSCH over which the system information is borne.

It shall be noted that the system information block 3 to the system information block 11 are required to be carried and whether to carry the system information block 12 is optional and determined at the network side.

Step 503. It is determined at the network side whether there is a downlink carrier for which no transmission mode of system information of the downlink carrier is configured.

Specifically it is determined at the network side whether there is a downlink carrier for which no transmission mode of system information of the downlink carrier is configured in either of the following two situations:
(a) The flow goes to the step 502 when it is determined at the network side that there is a downlink carrier for which no transmission mode of system information of the downlink carrier is configured; or
(b) The flow goes to the step 504 when it is determined at the network side that there is not any downlink carrier for which no transmission mode of system information of the downlink carrier is configured.

Step 504. The system information is transmitted from the network side over each downlink carrier in the configured transmission mode of the system information of each downlink carrier.

It shall be noted that the transmission modes of the various system information can be configured in the step 502 in a variable order.

In the steps 501 to 503, for each downlink carrier among the plurality of carriers, the master system information blocks of the present downlink carrier and all the other downlink carriers are transmitted from the network side, and possibly also the system information blocks 2 of the other downlink carriers can be carried, over the present downlink carrier.

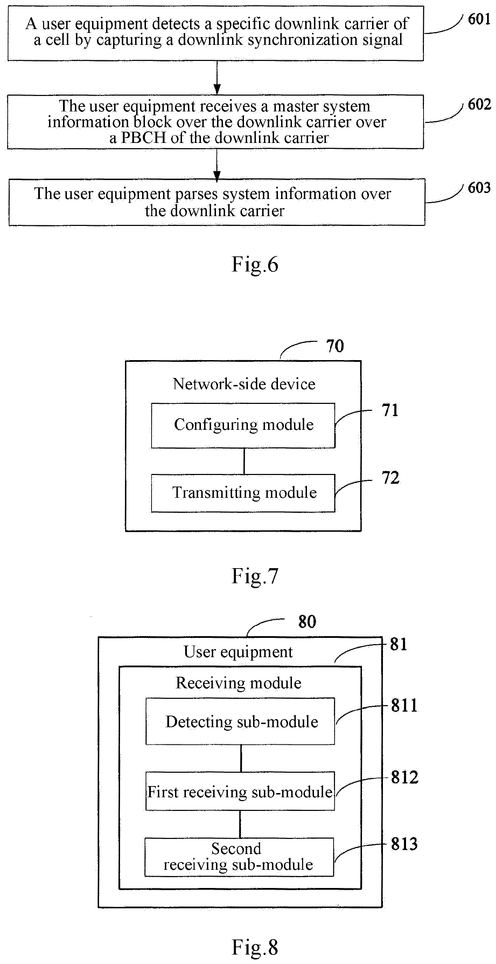

An embodiment of the invention provides a method for receiving system information of a plurality of carriers in a method for transmitting system information, as illustrated in Fig.6, which particularly includes the following steps:
In an LTE-A multi-carrier scenario, a user equipment receives system information of a cell as in the following steps:
Step 601. A user equipment detects a specific downlink carrier of a cell by capturing a downlink synchronization signal.
Step 602. The user equipment receives a master system information block over the downlink carrier over a PBCH of the downlink carrier and acquires a bandwidth and PHICH configuration information of the downlink carrier and a frame number of the cell.
Step 603. The user equipment parses system information over the downlink carrier.

Specifically the user equipment performs blind detection of a PDCCH of the downlink carrier after acquiring the PHICH configuration information of the downlink carrier. Blind detection refers to that the user equipment which has no knowledge of a transmission location or a modulating and encoding scheme of a PDCCH at the network side attempts various possibilities of respective occurrence locations and modulation and encoding schemes of the PDCCH to detect the PDCCH. A PDSCH corresponding to a specific PDCCH, i.e., system information, is parsed upon detected inclusion of an SI-RNTI over the PDCCH, particularly in the following steps:
(a) Since the system information block 1 is transmitted at a fixed location, the user equipment firstly parses the system information block 1. The system information block 1 includes scheduling information of respective system information blocks over the downlink carrier and information on whether the present downlink carrier allows an access, where the scheduling information of the respective system information blocks over the downlink carrier includes information on the locations and periodicities at which the respective system information blocks are transmitted over the downlink carrier. Therefore it is firstly determined whether an access of the user equipment to the downlink carrier is allowed according to the system information block 1.

The flow goes to the step 601 when no access of the user equipment is allowed; or

The flow goes to the step 603(2) when an access of the user equipment is allowed.

(2) Secondly the user equipment acquires the other system information blocks at corresponding locations according to the scheduling information of the other system information blocks in the system information block 1 and acquires corresponding system information borne in the other system information blocks.

Specifically the corresponding system information borne in the other system information blocks includes:
(a) The master system information block of the downlink carrier; and
(b) The system information 2 of the downlink carrier and the carried system information blocks 2 of the other downlink carriers.
   It shall be noted that the user equipment acquires the system information blocks 2 of the other downlink carriers which may not necessarily be the system information blocks 2 of all the other downlink carriers but may only the system information blocks 2 carried at the network side over the downlink carrier.
   Since there are a plurality of system information blocks 2 corresponding to different downlink carriers, the user equipment distinguishes the system information blocks 2 of the downlink carriers corresponding to different SI-RNTIs by the SI-RNTIs. A distinguishing method complies with a relationship known to both the user equipment and the network side and particularly is similar to the identifying method in the step 502, and a repeated description will be omitted here.
(c) The system information block 3 to the system information block 11 and the system information block 12 of the downlink carrier.

It shall be noted that the user equipment can acquire the system information block 12 of the downlink carrier only if the system information block 12 is carried at the network side over the downlink carrier.

That is, the user equipment can acquire the master system information block, the system information block 2 and the system information block 3 to the system information block 11 over the downlink carrier; and the user equipment can acquire the system information blocks 2 and 12 related to the other downlink carriers only if they are carried at the network side over the downlink carrier.

In the steps 601 to 603, the user equipment acquires over one downlink carrier in the cell among the plurality of carriers the master system information blocks of the present downlink carrier and all the other downlink carriers, and the system information blocks 2 of the other downlink carriers carried over the present downlink carrier.

An embodiment of the invention provides a communication system including:
the network side configured to transmit system information over a downlink carrier, which includes master system information and radio resource configuration information of the downlink carrier, and master system information of at least one other downlink carrier; and
a user equipment configured to receive the system information over the downlink carrier.

The network side is further configured to configure the master system information and the radio resource configuration information of each downlink carrier among a plurality of carriers, and for each downlink carrier among the plurality of carriers, to transmit the system information over the downlink carrier, which includes the master system information and the radio resource configuration information of the downlink carrier, and the master system information of the other downlink carriers.

An embodiment of the invention provides a network-side device 70, as illustrated in Fig.7, which includes:
a transmitting module 72 configured to transmit system information over a downlink carrier, which includes master system information and radio resource configuration information of the downlink carrier, and master system information of at least one other downlink carrier.

The system information further includes radio resource configuration information of the at least one other downlink carrier.

The network-side device 70 further includes a configuring module 71 configured to configure the master system information and the radio resource configuration information of each downlink carrier among a plurality of carriers; and the transmitting module 72 is further configured to transmit the system information over each downlink carrier among the plurality of carriers, where the system information includes the master system information and the radio resource configuration information of the downlink carrier, and the master system information of the at least one other downlink carrier.

The configuring module 71 is further configured, for each downlink carrier among the plurality of carriers, to configure the master system information of all the other downlink carriers in a system information block 12 of the downlink carrier.

The transmitting module 72 is further configured:
to transmit the master system information of the downlink carrier over a Physical Broadcast Channel (PBCH) of the downlink carrier;
to transmit the radio resource configuration information of the downlink carrier over a PDSCH of the downlink carrier; and
to transmit the master system information of all the other downlink carriers and/or the radio resource configuration information of the one or more other downlink carriers over the PDSCH of the downlink carrier.

And
the transmitting module 72 is further configured to carry an SI-RNTI of the downlink carrier over a PDCCH when the transmitting module transmits the radio resource configuration information of the downlink carrier over the PDSCH of the downlink carrier; and
the transmitting module 72 is further configured to carry an SI-RNTI or SI-RNTIs of the one or more other downlink carriers over the PDCCH when the transmitting module transmits the radio resource configuration information of the one or more other downlink carriers over the PDSCH of the downlink carrier.

And after the transmitting module 72 transmits the system information of the downlink carrier over the downlink carrier,
the user equipment receives the system information of the downlink carrier transmitted from the transmitting module 72 over the downlink carrier.

The master system information of the downlink carrier includes:
one or more of a frequency point, a bandwidth, a frame number and Physical HARQ Indicator Channel (PHICH) configuration information of the downlink carrier.

An embodiment of the invention provides a user equipment 80, as illustrated in Fig.8, which includes:
a receiving module 81 configured to receive system information transmitted from the network side over a downlink carrier to which the user equipment listens among a plurality of carriers, where the system information includes master system information and radio resource configuration information of the listened-to downlink carrier, and master system information of at least one other downlink carrier.

The system information further includes radio resource configuration information of the at least one other downlink carrier.

The system information further includes one or more of a system information block 1 and a system information block 3 to a system information block 11 of the downlink carrier over which the system information is transmitted.

The receiving module 81 includes:
a detecting sub-module 811 configured to detect the downlink carrier;
a first receiving sub-module 812 configured to receive the master system information of the downlink carrier detected by the detecting sub-module 811 over the downlink carrier; and
a second receiving sub-module 813 configured to receive other system information according to the master system information received by the first receiving sub-module over the downlink carrier, where the other system information includes the radio resource configuration information of the detected downlink carrier, and the master system information and the radio resource configuration information of the at least one other downlink carrier.

When the second receiving sub-module 813 receives the other system information among the system information of the downlink carrier than the master system information of the downlink carrier according to the master system information received by the first receiving sub-module 812 over the downlink carrier, the second receiving sub-module 813 is further configured:
to receive the radio resource configuration information of the downlink carrier over the downlink carrier by an SI-RNTI of the downlink carrier carried over the downlink carrier; and
to receive the radio resource configuration information of the at least one other downlink carrier over the downlink carrier by an SI-RNTI of the at least one other downlink carrier carried over the downlink carrier.

The master system information of the downlink carrier includes:
one or more of a frequency point, a bandwidth, a frame number and Physical HARQ Indicator Channel (PHICH) configuration information of the downlink carrier.

In the embodiments of the invention, each downlink carrier among a plurality of carriers is configured with system information of the other downlink carriers, and the system information is transmitted over the corresponding downlink carrier, so that a user equipment can receive the system information of the other downlink carriers over the corresponding downlink carrier to thereby improve the speed at which and the efficiency with which the user equipment acquires the system information of the other downlink carriers. Of course, any product according to an embodiment of the invention may not necessarily attain all the foregoing advantages at the same time.

The solution of the invention has been described in the foregoing respective embodiments in which the operations are performed at the network side for each downlink carrier among a plurality of carriers, but the embodiments of the invention will not be limited to the solution in which the operations are performed at the network side over at least one downlink carrier to address the technical problem of the invention.

The operations at the network side over a downlink carrier includes configuring master system information and radio resource configuration information of the downlink carrier and transmitting system information over the downlink carrier, which includes the master system information and the radio resource configuration information of the downlink carrier and master system information of at least one other downlink carrier, and possibly further includes radio resource configuration information of the at least one other downlink carrier.

With the foregoing description of the embodiments, those skilled in the art can appreciate clearly that the invention can be embodied in software plus a necessary general-purpose hardware platform and of course can alternatively be embodied in hardware, but the former is a preferable implementation in many cases. Based upon such understanding, the technical solution of the invention in essence or the part thereof contributing to the prior art can be embodied in the form of a computer software product which is stored in a storage medium and which includes several instructions to enable an end device (e.g., a mobile phone, a personal computer, a server, a network device, etc.) to perform the methods according to the respective embodiments of the invention.

The foregoing description is merely illustrative of the preferred embodiments of the invention, and it shall be noted that those ordinarily skilled in the art can further make several modifications and variations and these modifications and variations shall also come into the claimed scope of the invention.

## Claims

1. A method for transmitting system information in an LTE-Advanced, LTE-A, system in a multi-carrier communication scenario, wherein a plurality of downlink carriers are configured in one cell in the LTE-A system, each downlink carrier is configured with one master system information block and radio resource configuration information, the method comprising:
transmitting (302), from a network side, system information over a downlink carrier of the plurality of downlink carriers, wherein the system information comprises a master system information block of the downlink carrier, radio resource configuration information of the downlink carrier, a master system information block of at least one other downlink carrier among the plurality of downlink carriers, and radio resource configuration information of the at least one other downlink carrier;
receiving, by a user equipment, the system information over the downlink carrier;
wherein the user equipment receiving the system information over the downlink carrier comprises:
the user equipment detecting the downlink carrier;
the user equipment receiving the master system information block of the detected downlink carrier over the downlink carrier; and
the user equipment receiving other system information over the downlink carrier according to the master system information block, wherein the other system information comprises the radio resource configuration information of the downlink carrier, and the master system information block and the radio resource configuration information of the at least one other downlink carrier;
wherein transmitting the system information from the network side over the downlink carrier comprises:
transmitting the master system information block of the downlink carrier from the network side over a Physical Broadcast Channel, PBCH, of the downlink carrier;
**characterized by** transmitting the radio resource configuration information of the downlink carrier from the network side over a Physical Downlink Shared Channel, PDSCH; and
transmitting the master system information block and the radio resource configuration information of the at least one other downlink carrier from the network side over the PDSCH;
and the method further comprises:
carrying at the network side a System Information-Radio Network Temporary Identifier, SI-RNTI, of the downlink carrier over a Physical Downlink Control Channel, PDCCH, when the radio resource configuration information of the downlink carrier is transmitted over the PDSCH of the downlink carrier; and
carrying at the network side an SI-RNTI of the at least one other downlink carrier over the PDCCH when the radio resource configuration information of the at least one other downlink carrier is transmitted over the PDSCH of the downlink carrier.

2. The method according to claim 1, wherein the master system information block and radio resource configuration information of each downlink carrier among the plurality of downlink carriers is configured at the network side, and the system information is transmitted over each downlink carrier among the plurality of downlink carriers.

3. The method according to claim 1, wherein the master system information block of the at least one other downlink carrier is configured at the network side in a system information block 12 of the downlink carrier over which the system information is transmitted.

4. The method according to claim 1, wherein the user equipment receiving the other system information comprises:
the user equipment receiving the radio resource configuration information of the downlink carrier by the SI-RNTI of the downlink carrier carried over the downlink carrier; and
the user equipment receiving the radio resource configuration information of the at least one other downlink carrier by the SI-RNTI of the at least one other downlink carrier carried over the downlink carrier.

5. A communication system in an LTE-Advanced, LTE-A, system in a multi-carrier communication scenario, wherein a plurality of downlink carriers are configured in one cell in the LTE-A system, each downlink carrier is configured with one master system information block and radio resource configuration information, the communication system comprising:
a network-side device (70), configured to transmit system information over a downlink carrier of the plurality of downlink carriers, wherein the system information comprises a master system information block of the downlink carrier, radio resource configuration information of the downlink carrier, a master system information block of at least one other downlink carrier among the plurality of downlink carriers, and radio resource configuration information of the at least one other downlink carrier;
a user equipment (80) configured to receive system information over the downlink carrier, wherein the user equipment configured to detect the downlink carrier, receive the master system information block of the detected downlink carrier over the downlink carrier; and receive other system information over the downlink carrier according to the master system information block, wherein the other system information comprises the radio resource configuration information of the downlink carrier, and the master system information block and the radio resource configuration information of the at least one other downlink carrier;
wherein the network-side device is configured to:
to transmit the master system information block of the downlink carrier over a Physical Broadcast Channel, PBCH, of the downlink carrier;
**characterized in that** the network-side is further configured to transmit the radio resource configuration information of the downlink carrier over a Physical Downlink Shared Channel, PDSCH; and
to transmit the master system information block and the radio resource configuration information of the at least one other downlink carrier over the PDSCH;
wherein the network-side device is further configured to carry a System Information-Radio Network Temporary Identifier, SI-RNTI, of the downlink carrier over a Physical Downlink Control Channel, PDCCH, when the radio resource configuration information of the downlink carrier is transmitted over the downlink carrier; and to carry an SI-RNTI of the at least one other downlink carriers over the PDCCH when the radio resource configuration information of the at least one other downlink carrier is transmitted.

6. The communication system according to claim 5, wherein the network-side device is further configured to:
configure the master system information block and the radio resource configuration information of each downlink carrier among the plurality of downlink carriers; and
transmit the system information over each downlink carrier among the plurality of downlink carriers.

7. The communication system according to claim 5, wherein the user equipment is further configured:
to receive the radio resource configuration information of the downlink carrier over the downlink carrier by the SI-RNTI of the downlink carrier carried over the downlink carrier; and
to receive the radio resource configuration information of the at least one other downlink carrier over the downlink carrier by the SI-RNTI of the at least one other downlink carrier carried over the downlink carrier.

## Patentansprüche

1. Verfahren zur Übertragung von Systeminformationen in einem LTE-Advanced, LTE-A, System in einem Mehrträger-Kommunikationsszenario, wobei eine Mehrzahl von Downlink-Trägern in einer Zelle in dem LTE-A System konfiguriert ist, jeder Downlink-Träger mit einem Master-Systeminformationsblock und Funkquellen-Konfigurationsinformationen konfiguriert ist, wobei das Verfahren Folgendes aufweist:
Übertragen (302) von einer Netzwerkseite, von Systeminformationen über einen Downlink-Träger der Mehrzahl von Downlink-Trägern, wobei die Systeminformationen einen Master-Systeminformationsblock des Downlink-Trägers, Funkquellen-Konfigurationsinformationen des Downlink-Trägers, einen Master-Systeminformationsblock von mindestens einem anderen Downlink-Träger aus der Mehrzahl von Downlink-Trägern sowie Funkquellen-Konfigurationsinformationen des mindestens einen anderen Downlink-Trägers enthalten;
Empfangen, durch ein Benutzergerät, der Systeminformationen über den Downlink-Träger;
wobei das die System informationen über den Downlink-Träger empfangende Benutzergerät Folgendes aufweist:
das den Downlink-Träger erfassende Benutzergerät;
das den Master-Systeminformationsblock des erfassten Downlink-Trägers über den Downlink-Träger empfangende Benutzergerät; sowie
das andere Systeminformationen über den Downlink-Träger gemäß dem Master-Systeminformationsblock empfangende Benutzergerät, wobei die anderen Systeminformationen die Funkquellen-Konfigurationsinformationen des Downlink-Trägers sowie den Master-Systeminformationsblock und die Funkquellen-Konfigurationsinformationen des mindestens einen anderen Downlink-Trägers enthalten;
wobei das Übertragen der System informationen von der Netzwerkseite über den Downlink-Träger Folgendes aufweist:
Übertragen des Master-Systeminformationsblocks des Downlink-Trägers von der Netzwerkseite über einen Physical Broadcast Channel, PBCH, des Downlink-Trägers;
**gekennzeichnet durch**
Übertragen der Funkquellen-Konfigurationsinformationen des Downlink-Trägers von der Netzwerkseite über einen Physical Downlink Shared Channel, PDSCH; und
Übertragen des Master-Systeminformationsblocks und der Funkquellen-Konfigurationsinformationen des mindestens einen anderen Downlink-Trägers von der Netzwerkseite über den PDSCH;
und das Verfahren ferner Folgendes aufweist:
Transportieren auf der Netzwerkseite einer temporären Systeminformations-Funknetzwerkkennung/System Information-Radio Network Temporary Identifier, Sl-RNTI, des Downlink-Trägers über einen Physical Downlink Control Channel, PDCCH, wenn die Funkquellen-Konfigurationsinformationen des Downlink-Trägers über den PDSCH des Downlink-Trägers übertragen werden; und
Transportieren auf der Netzwerkseite einer SI-RNTI des mindestens einen anderen Downlink-Trägers über den PDCCH, wenn die Funkquellen-Konfigurationsinformationen des mindestens einen anderen Downlink-Trägers über den PDSCH des Downlink-Trägers übertragen werden.

2. Verfahren nach Anspruch 1, wobei der Master-Systeminformationsblock und die Funkquellen-Konfigurationsinformationen jedes Downlink-Trägers aus der Mehrzahl von Downlink-Trägern auf der Netzwerkseite konfiguriert werden, und die Systeminformationen über jeden Downlink-Träger aus der Mehrzahl von Downlink-Trägern übertragen werden.

3. Verfahren nach Anspruch 1, wobei der Master-Systeminformationsblock des mindestens einen anderen Downlink-Trägers auf der Netzwerkseite in einem Systeminformationsblock 12 des Downlink-Trägers konfiguriert wird, über welchen die Systeminformationen übertragen werden.

4. Verfahren nach Anspruch 1, wobei das die anderen System informationen empfangende Benutzergerät Folgendes aufweist:
das Benutzergerät, das die Funkquellen-Konfigurationsinformationen des Downlink-Trägers durch die über den Downlink-Träger transportierte SI-RNTI des Downlink-Trägers empfängt; sowie
das Benutzergerät, das die Funkquellen-Konfigurationsinformationen des mindestens einen anderen Downlink-Trägers durch die über den Downlink-Träger transportierte SI-RNTI des mindestens einen anderen Downlink-Trägers empfängt.

5. Kommunikationssystem in einem LTE-Advanced, LTE-A, System in einem Mehrträger-Kommunikationsszenario, wobei
eine Mehrzahl von Downlink-Trägern in einer Zelle in dem LTE-A System konfiguriert ist, jeder Downlink-Träger mit einem Master-Systeminformationsblock und Funkquellen-Konfigurationsinformationen konfiguriert ist, wobei das Kommunikationssystem Folgendes aufweist:
ein netzwerkseitiges Gerät (70), das zum Übertragen von Systeminformationen über einen Downlink-Träger der Mehrzahl von Downlink-Trägern ausgeführt ist, wobei die Systeminformationen einen Master-Systeminformationsblock des Downlink-Trägers, Funkquellen-Konfigurationsinformationen des Downlink-Trägers, einen Master-Systeminformationsblock von mindestens einem anderen Downlink-Träger aus der Mehrzahl von Downlink-Trägern und Funkquellen-Konfigurationsinformationen des mindestens einen anderen Downlink-Trägers enthalten;
ein Benutzergerät (80), das zum Empfangen von Systeminformationen über den Downlink-Träger ausgeführt ist, wobei das Benutzergerät dazu konfiguriert ist, den Downlink-Träger zu erfassen, den Master-Systeminformationsblock des erfassten Downlink-Trägers über den Downlink-Träger zu empfangen, und andere Systeminformationen über den Downlink-Träger gemäß dem Master-Systeminformationsblock zu empfangen, wobei die anderen Systeminformationen die Funkquellen-Konfigurationsinformationen des Downlink-Trägers sowie den Master-Systeminformationsblock und die Funkquellen-Konfigurationsinformationen des mindestens einen anderen Downlink-Trägers enthalten;
wobei das netzwerkseitige Gerät dazu konfiguriert ist:
den Master-Systeminformationsblock des Downlink-Trägers über einen Physical Broadcast Channel, PBCH, des Downlink-Trägers zu übertragen;
**dadurch gekennzeichnet, dass** die Netzwerkseite ferner dazu konfiguriert ist,
die Funkquellen-Konfigurationsinformationen des Downlink-Trägers über einen Physical Downlink Shared Channel, PDSCH zu übertragen; und
den Master-Systeminformationsblock und die Funkquellen-Konfigurationsinformationen des mindestens einen anderen Downlink-Trägers über den PDSCH zu übertragen;
wobei das netzwerkseitige Gerät ferner dazu konfiguriert ist, eine temporäre Systeminformations-Funknetzwerkkennung, SI-RNTI, des Downlink-Trägers über einen Physical Downlink Control Channel, PDCCH, zu transportieren, wenn die Funkquellen-Konfigurationsinformationen des Downlink-Trägers über den Downlink-Träger übertragen werden; und eine SI-RNTI des mindestens einen anderen Downlink-Trägers über den PDCCH zu transportieren, wenn die Funkquellen-Konfigurationsinformationen des mindestens einen anderen Downlink-Trägers übertragen werden.

6. Kommunikationssystem nach Anspruch 5, wobei das netzwerkseitige Gerät ferner dazu konfiguriert ist:
den Master-Systeminformationsblock und die Funkquellen-Konfigurationsinformationen jedes Downlink-Trägers aus der Mehrzahl von Downlink-Trägern zu konfigurieren; und
die Systeminformationen über jeden Downlink-Träger aus der Mehrzahl von Downlink-Trägern zu übertragen.

7. Kommunikationssystem nach Anspruch 5, wobei das Benutzergerät ferner dazu konfiguriert ist:
die Funkquellen-Konfigurationsinformationen des Downlink-Trägers über den Downlink-Träger durch die über den Downlink-Träger transportierte SI-RNTI des Downlink-Trägers zu empfangen; und
die Funkquellen-Konfigurationsinformationen des mindestens einen anderen Downlink-Trägers über den Downlink-Träger durch die über den Downlink-Träger transportierte SI-RNTI des mindestens einen anderen Downlink-Trägers zu empfangen.

## Revendications

1. Procédé pour transmettre des informations de système dans un système TE-Avancé, LTE-A, dans un scénario de communication à porteuses multiples, dans lequel les porteuses d'une pluralité de porteuses de liaison descendante sont configurées dans une seule cellule dans le système LTE-A, chaque porteuse de liaison descendante est configurée avec un bloc maître d'informations de système et des informations de configuration de ressources radio, le procédé comportant les étapes consistant à :
transmettre (302), depuis un côté réseau, des informations de système sur une porteuse de liaison descendante parmi la pluralité de porteuses de liaison descendante, dans lequel les informations de système comportent un bloc maître d'informations de système de la porteuse de liaison descendante, des informations de configuration de ressources radio de la porteuse de liaison descendante, un bloc maître d'informations de système d'au moins une autre porteuse de liaison descendante parmi la pluralité de porteuses de liaison descendante, et des informations de configuration de ressources radio de la au moins une autre porteuse de liaison descendante ;
recevoir, par un équipement d'utilisateur, les informations de système sur la porteuse de liaison descendante ;
dans lequel la réception par l'équipement d'utilisateur des informations de système sur la porteuse de liaison descendante comporte les étapes consistant à :
détecter, par l'équipement d'utilisateur, la porteuse de liaison descendante ;
recevoir, par l'équipement d'utilisateur, le bloc maître d'informations de système de la porteuse de liaison descendante détectée sur la porteuse de liaison descendante ; et
recevoir, par l'équipement d'utilisateur, d'autres informations de système sur la porteuse de liaison descendante en fonction du bloc maître d'informations de système, dans lequel les autres informations de système comportent les informations de configuration de ressources radio de la porteuse de liaison descendante, et le bloc maître d'informations de système et les informations de configuration de ressources radio de la au moins une autre porteuse de liaison descendante ;
dans lequel la transmission des informations de système depuis le côté réseau sur la porteuse de liaison descendante comporte l'étape consistant à :
transmettre le bloc maître d'informations de système de la porteuse de liaison descendante depuis le côté réseau sur un canal physique de diffusion, PBCH, de la porteuse de liaison descendante ;
**caractérisé par** les étapes consistant à :
transmettre les informations de configuration de ressources radio de la porteuse de liaison descendante depuis le côté réseau sur un canal physique partagé de liaison descendante, PDSCH ; et
transmettre le bloc maître d'informations de système et les informations de configuration de ressources radio de la au moins une autre porteuse de liaison descendante depuis le côté réseau sur le PDSCH ;
et le procédé comporte en outre les étapes consistant à :
transporter du côté réseau un identifiant temporaire de réseau radio-information de système, SI-RNTI, de la porteuse de liaison descendante sur un canal physique de contrôle de liaison descendante, PDCCH, lorsque les informations de configuration de ressources radio de la porteuse de liaison descendante sont transmises via le PDSCH de la porteuse de liaison descendante ; et
transporter du côté réseau un SI-RNTI de la au moins une autre porteuse de liaison descendante via le PDCCH lorsque les informations de configuration de ressources radio de la au moins une autre porteuse de liaison descendante sont transmises sur le PDSCH de la porteuse de liaison descendante.

2. Procédé selon la revendication 1, dans lequel le bloc maître d'informations de système et les informations de configuration de ressources radio de chaque porteuse de liaison descendante parmi la pluralité de porteuses de liaison descendante sont configurés du côté réseau, et les informations de système sont transmises sur chaque porteuse de liaison descendante parmi la pluralité de porteuses de liaison descendante.

3. Procédé selon la revendication 1, dans lequel le bloc maître d'informations de système de la au moins une autre porteuse de liaison descendante est configuré du côté réseau dans un bloc d'informations de système 12 de la porteuse de liaison descendante sur laquelle les informations de système sont transmises.

4. Procédé selon la revendication 1, dans lequel la réception par l'équipement d'utilisateur des autres informations de système comporte les étapes consistant à :
recevoir, par l'équipement d'utilisateur, les informations de configuration de ressources radio de la porteuse de liaison descendante par le SI-RNTI de la porteuse de liaison descendante transportée via la porteuse de liaison descendante ; et
recevoir, par l'équipement d'utilisateur, les informations de configuration de ressources radio de la au moins une autre porteuse de liaison descendante par le SI-RNTI de la au moins une autre porteuse de liaison descendante transportée via la porteuse de liaison descendante.

5. Système de communication dans un système LTE-Avancé, LTE-A, dans un scénario de communication à porteuses multiples, dans lequel une pluralité de porteuses de liaison descendante sont configurées dans une seule cellule dans le système LTE-A, chaque porteuse de liaison descendante est configurée avec un bloc maître d'informations de système et des informations de configuration de ressources radio, le système de communication comportant :
un dispositif côté réseau (70), configuré pour transmettre des informations de système sur une porteuse de liaison descendante parmi la pluralité de porteuses de liaison descendante, dans lequel les informations de système comportent un bloc maître d'informations de système de la porteuse de liaison descendante, des informations de configuration de ressources radio de la porteuse de liaison descendante, un bloc maître d'informations de système d'au moins une autre porteuse de liaison descendante parmi la pluralité de porteuses de liaison descendante, et des informations de configuration de ressources radio de la au moins une autre porteuse de liaison descendante ;
un équipement d'utilisateur (80) configuré pour recevoir des informations de système sur la porteuse de liaison descendante, dans lequel l'équipement d'utilisateur est configuré pour détecter la porteuse de liaison descendante, recevoir le bloc maître d'informations de systèmes de la porteuse de liaison descendante détectée sur la porteuse de liaison descendante ; et recevoir d'autres informations de système sur la porteuse de liaison descendante en fonction du bloc maître d'informations de système, dans lequel les autres informations de système comportent les informations de configuration de ressources radio de la porteuse de liaison descendante, et le bloc maître d'informations de système et les informations de configuration de ressources radio de la au moins une autre porteuse de liaison descendante ;
dans lequel le dispositif côté réseau est configuré pour :
transmettre le bloc maître d'informations de système de la porteuse de liaison descendante sur un canal physique de diffusion, PBCH, de la porteuse de liaison descendante ;
**caractérisé en ce que** le côté réseau est en outre configuré pour :
transmettre les informations de configuration de ressources radio de la porteuse de liaison descendante sur un canal physique partagé de liaison descendante, PDSCH ; et
transmettre le bloc maître d'informations de système et les informations de configuration de ressources radio de la au moins une autre porteuse de liaison descendante sur le PDSCH ;
dans lequel le dispositif côté réseau est en outre configuré pour transporter un identifiant temporaire de réseau radio-information de système, SI-RNTI, de la porteuse de liaison descendante sur un canal physique de contrôle de liaison descendante, PDCCH, lorsque les informations de configuration de ressources radio de la porteuse de liaison descendante sont transmises sur la porteuse de liaison descendante ; et pour exécuter un SI-RNTI de la au moins une autre porteuse de liaison descendante sur le PDCCH lorsque les informations de configuration de ressources radio de la au moins une autre porteuse de liaison descendante sont transmises.

6. Système de communication selon la revendication 5, dans lequel le dispositif côté réseau est en outre configuré pour :
configurer le bloc maître d'informations de système et les informations de configuration de ressources radio de chaque porteuse de liaison descendante parmi la pluralité de porteuses de liaison descendante ; et
transmettre les informations de système sur chaque porteuse de liaison descendante parmi la pluralité de porteuses de liaison descendante.

7. Système de communication selon la revendication 5, dans lequel l'équipement d'utilisateur est en outre configuré pour :
recevoir les informations de configuration de ressources radio de la porteuse de liaison descendante via la porteuse de liaison descendante par le SI-RNTI de la porteuse de liaison descendante transportée via la porteuse de liaison descendante ; et
recevoir les informations de configuration de ressources radio de la au moins une autre porteuse de liaison descendante via la porteuse de liaison descendante par le SI-RNTI de la au moins une autre porteuse de liaison descendante transportée via la porteuse de liaison descendante.
